# EUROPEAN PATENT APPLICATION

(11) **EP 1 930 076 A1**
(43) Date of publication of application: **11.06.2008**
(21) Application number: 06797886.6
(22) Date of filing: 06.09.2006
(51) Int. Cl.: B01J 23/89, C01B 3/40

(54) **CATALYST FOR CATALYTIC PARTIAL OXIDATION OF HYDROCARBON AND PROCESS FOR PRODUCING SYNTHESIS GAS**

(30) Priority: 08.09.2005 JP 2005260633
(71) Applicant: JGC Corporation, Tokyo 100-0004 (JP); OSAKA GAS CO., LTD., Osaka-shi, Osaka 541-0046 (JP)
(72) Inventor: FUJIE, Hirokazu, Higashiibaraki-gun, Ibaraki 3111313 (JP); WATANABE, Yoshiyuki, Yokohama-shi, Kanagawa 2206001 (JP); MURATA, Chizu, Higashiibaraki-gun, Ibaraki 3111313 (JP)
(74) Representative: TBK-Patent
(86) International application number: PCT/JP2006/318094
(87) International publication number: WO 2007/029862

(57) **Abstract**

[Problem] To provide a catalyst for catalytic partial oxidation having a high activity and a long-term durability; and to provide a method capable of attaining long-term stable catalytic partial oxidation.

[Means for Solution] The catalyst for catalytic partial oxidation comprises a carrier obtained by adding nickel and at least one of barium and lanthanum to alumina or an alumina precursor followed by firing it, and a platinum group element such as rhodium held by the carrier. The carrier is obtained, for example, by firing at a temperature not lower than 600°C, and in the firing step, nickel aluminate is formed. The catalyst is filled into a heat-insulating reactor; and oxygen and steam and hydrogen are added to a starting hydrocarbon (when the starting hydrocarbon contains hydrogen, adding hydrogen thereto is unnecessary), and this is fed into the reactor.

## Description

### [Technical Field]

The present invention relates to a catalyst used in producing synthetic gas that contains carbon monoxide and hydrogen, through partial oxidation to be attained by adding oxygen to light hydrocarbon such as natural gas and associated gas containing methane and hydrocarbon having at least 2 carbon atoms; and to a method for producing synthetic gas.

### [Background Art]

Recently, the global environmental problem caused by mass-consumption of fossil fuel such as petroleum and coal, and the problem of depletion of oil resources in future have been discussed, and GTL (hydrocarbon liquid fuel) and DME (dimethyl ether) that are clean fuels produced from natural gas have become specifically noted. The starting gas to produce GTL and DME is referred to as synthetic gas, and it contains carbon monoxide and hydrogen.

As a method of producing synthetic gas, heretofore steam reformation (SMR) and partial oxidation (POX) with oxygen in the absence of catalyst are the mainstream as having brought actual results; but these production methods have some problems as mentioned below, when applied to GTL or DME plants that require large-scale synthetic gas production apparatus. In SMR, for example, a large-scale SMR apparatus requires a large number of reactor tubes and therefore requires a large area for its installation, and the method is disadvantageous as being uneconomic. In POX; when natural gas is used as the starting gas, then the method is defective in that the ratio of H₂/CO in the synthetic gas produced therein is difficult to control, but controlling the ratio is necessary for the starting synthetic gas for GTL and DME.

Another method of producing synthetic gas is an autothermal reforming method (ATR method) of effecting both oxidation with an oxygen burner and steam reformation in one and the same reactor. This method is suitable to large-scale plants and the ratio of H₂/CO in the synthetic gas produced therein is easy to control, and recently, it has brought actual results. However, it is known that, when the starting gas in the method contains a component of C2 or more such as natural gas, then there may occur some trouble of carbonaceous matter deposition around the burner part. Accordingly, a method is employed for it, comprising disposing a steam reformer in the former stage of the ATR apparatus, reforming a part of the component of C2 or more (having two or more carbon atoms) and methane in natural gas to obtain hydrogen gas, and feeding it to the ATR apparatus (Non-Patent Reference 1).

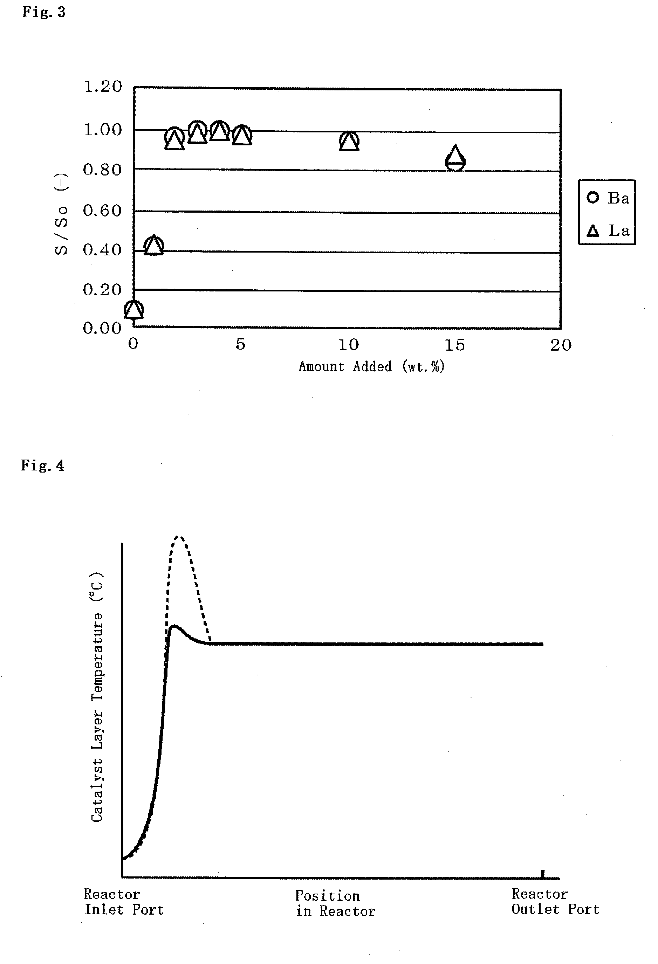

However, such two-stage reformation is defective in that, in a large-size industrial-scale apparatus, the operation for starting up, turning down and shutting down is complicated and the equipment for it is inevitably scaled up.
On the other hand, development of catalytic partial oxidation (CPO) has become specifically noted, which comprises partial oxidation of a starting hydrocarbon material with high-concentration oxygen in the presence of a catalyst to obtain synthetic gas. Catalytic partial oxidation uses no burner and is therefore superior to autothermal reforming in that, even when a component of C2 or more is in the starting gas therein, the method does not require a pre-reformer. Another advantage of the method is that, since the reaction speed with catalyst therein is extremely high, the reaction may be completed even under a high SV condition on a level of from tens of thousands to millions hr⁻¹. With methane as an example, the reaction essentially includes the following:
(1) CH₄ + 1/2O₂ → 2H₂ + CO ΔH298 = -36 kJ/mol
(2) CH₄ + 2O₂ → CO₂ + 2H₂O ΔH298 = -879 kJ/mol
(3) CO + H₂O → CO₂ + H₂ ΔH298 = -42 kJ/mol
(4) CH₄ + H₂O → CO + 3H₂ ΔH298 = +206 kJ/mol
(5) CH₄ + CO₂ → 2CO + 2H₂ ΔH298 = +248 kJ/mol
   The reaction of (1) to (5) goes on simultaneously or successively, and the outlet gas composition is governed by the state of equilibrium thereof, but the reaction is an extremely great exothermic reaction as a whole. In the reaction, the reaction speed of (1) and (2) is extremely high, and in particular, the reaction heat in complete oxidation of (2) is great, and therefore a hot spot occurs at around the inlet to a catalyst layer. Fig. 4 is a graph in which the position from the inlet side to the outlet side of a reactor is on the horizontal axis and the temperature of a catalyst layer is on the vertical axis and in which the dotted local peak of extremely high temperature at around the inlet port of the catalyst layer indicates a phenomenon of hot spot. When the hot spot has occurred, then there occurs degradation owing the sintering (shrinkage) of catalyst and the deposition of some carbonaceous matter; and when a carbonaceous matter has deposited to adhere to catalyst, then the pressure on the upstream side inside the reactor is too high as compared with the pressure on the downstream side therein, therefore causing a problem in that the pressure may be over the pressure resistance limit of the reactor. In Fig. 4, the mountain part of the solid line indicates that the hot spot is retarded in that part, and in this case, the catalyst degradation owing to the catalyst sintering and the carbonaceous matter deposition may be reduced. Regarding the catalyst sintering, it is known that, even though the hot spot could be retarded, side reaction of carbonaceous matter formation may occur, as shown below, owing to the above-mentioned, extremely high exothermic reaction, and, as a result, the catalyst activity may lower and the reactor may be clogged.
(6) CH₄ → C + 2H₂
(7) 2CO → C + CO₂
(8) CnHm → nC + (m/2) H₂
For preventing the catalyst degradation owing to the carbonaceous matter formation, a method is known, comprising adding steam to the starting gas to thereby increase the ratio of steam/carbon in the starting gas, therefore preventing the formation of a carbonaceous matter on the catalyst. On the contrary, however, there is a problem in that the carrier sintering may be rather promoted under a high-temperature/high-steam partial pressure condition and the catalyst degradation may be therefore accelerated owing to the reduction in the active surface area of the catalyst.
Further, since the catalytic partial oxidation process is an extremely high exothermic reaction, the catalyst to be used therein is required to have extremely high heat resistance. From the above, catalytic partial oxidation is an extremely hardly practicable technique.

On the other hand, when the reaction of formula (1) could selectively go on, then the heat generation may be small and a synthetic gas ideal for GTL with H₂/CO = 2.0 could be produced at high yield. Accordingly, some methods for selectively promoting the reaction (1) for direct partial oxidation have been much studied these days.
In Patent Reference 2, proposed is such direct catalytic partial oxidation (DCPO). In this, used is a catalyst that comprises an active ingredient of a spinel structure of Rh·MAl₂O₄ (in which M is a substance selected from Co, Al, Li, Ti, Ni, Mn, Cd, Zn, Cu, Mg, Ca, Fe, Mo and La, or their mixture) held by a carrier of α-alumina or stabilized zirconia having good heat resistance. Under a high SV condition, a starting gas prepared by mixing hydrocarbon and oxygen is led to pass through a column within a contact period of time of not longer than 10 milliseconds to thereby selectively attain only the reaction of formula (1).
In this connection, it is extremely difficult to selectively keep only the reaction of formula (1) for a long period of time; and though Patent Reference 2 enumerates the additives to the catalyst, it says nothing as to which additive would be effective or which combination of additives would be effective.

On the other hand, regarding the catalytic partial oxidation governed by the equilibrium of (1) to (5), Patent Reference 3 discloses an example of a catalytic partial oxidation process that comprises adding steam to a starting natural gas material under such that the steam molar number/carbon molar number is 0.20, the oxygen molar number/carbon molar number is 0.58, the inlet port temperature is 200°C and the reactor outlet gas temperature is 1033°C. When a known noble metal-based or Ni-based catalyst is used as the catalytic partial oxidation catalyst under such a high-oxygen reaction condition, then the reaction of (2) goes on predominantly and therefore a hot spot occurs at around the inlet to the catalyst layer, and, as a result, the catalyst degradation owing to sintering or carbonaceous matter formation would be serious. Accordingly, in Patent Reference 3, proposed is a combined process of low-oxygen catalytic partial oxidation with small heat generation and ATR. Like ATR alone, however, this process is also for two-stage reformation and is therefore defective in that the equipment for it is scaled up and the operation is complicated.

On the background as above, development of one-stage reformation of catalytic partial oxidation is expected for a method of producing a large quantity of synthetic gas capable of coping with the increase in the demand for GTL and DME in future as above. For realizing it, however, it is desired to develop a catalyst and a process excellent in the reaction selectivity not forming a hot spot and in the durability thereof.

The reason why the catalytic partial oxidation process is difficult to industrialize as so mentioned hereinabove is the occurrence of the hot spot at around the inlet to the catalyst layer under a high-oxygen condition. In addition, another reason is that Pt and Rh known as a high-active catalyst for catalytic partial oxidation are rare metals and are extremely expensive.
In Non-Patent Reference 4, proposed is a Pt-Ni bimetal catalyst that comprises a combination of Ni having a high methane-reforming activity of formulae (3) to (5) and Pt having a high methane-oxidizing activity of formulae (1) and (2), for the purpose of retarding the hot spot occurrence and reducing the amount of the expensive noble metal to be held by carrier. Ni is highly active to both partial oxidation and reformation, but since NiO is not active to reformation of endothermic reaction, the existence of NiO causes hot spot formation. In Non-Patent Reference 4, it is reported that the bimetal catalyst of Ni with Pt could inhibit the oxidation of Ni since Ni is combined with Pt that is hardly oxidized and has both an oxidation activity and a reformation activity. However, nothing is disclosed therein relating to a concrete method for utilizing an expensive noble metal as efficiently as possible. Specifically, NiO could be converted into Ni through preliminary reduction, but for the purpose of inhibiting the oxidation of Ni, a corresponding amount of Pt to Ni is necessary, and as a result, significant reduction in the amount of Pt to be used could not be expected, and accordingly, the Pt-Ni bimetal catalyst would also be difficult to industrialize.

In addition, since catalytic partial oxidation is an extremely high exothermic reaction as so mentioned hereinabove, the catalyst layer for it is exposed to a high-temperature/high-steam partial pressure atmosphere at 1000°C or higher for a long period of time. Accordingly, for the purpose of industrializing the catalytic partial oxidation process, not only the prevention of hot spot formation but also how to prevent the catalyst sintering and the carbonaceous matter formation is an important key point. From the above, the problems to be solved for catalytic partial oxidation are essentially the following:
(1) Reduction in the amount of noble metal such as Rh, Pt, Ru.
(2) Inhibition of hot spot occurrence.
(3) Inhibition of sintering under high-temperature/high-steam partial pressure condition.
(4) Inhibition of carbonaceous matter deposition.
(5) Development of carrier having good thermal shock resistance.
   [Non-Patent Reference 1] PEC-2000L-07, "Survey of Liquid Fuel Technology Starting from Natural Gas/Heavy Residual Oil" (March 2001, by the Petroleum Industry Activation Center of Japan (
   [Patent Reference 1] WO02/066403A1, claim 2, and from page 6, 3rd paragraph to page 7, line 7
   [Patent Reference 2] JP-A 2002-97479, paragraph 0031
   [Non-Patent Reference 2] Keiichi Tomishige & Kimio Kunimori, PETROTECH, 26, 433 (2003)

### [Disclosure of the Invention]

### [Problems that the Invention is to Solve]

The invention has been made under the situation as above, and its one object is to provide a catalyst for catalytic partial oxidation, which is highly active and highly selective and has long-term durability. Another object of the invention is to provide a method for long-term stable catalytic partial oxidation of using the catalyst.

### [Means for Solving the Problems]

We, the present inventors have first turned our attention to nickel that is active to both partial oxidation and steam reformation and is relatively inexpensive, and then to a spinel structure-rich nickel aluminate prepared by firing nickel and alumina at a high temperature of not lower than 600°C, which is a carrier stable even in a high-temperature/high-steam condition and satisfying the requirement for catalyst for catalytic partial oxidation. However, nickel aluminate alone could not have sufficient heat resistance, and therefore, as a result of assiduous studies, we have found that, when lanthanum or barium is added thereto, then the carrier containing nickel aluminate is significantly inhibited from being sintered even in a high-temperature/high-steam partial pressure atmosphere during reaction. We have investigated use of the thermally-stable nickel aluminate as a carrier for a platinum group catalyst having high catalytic partial oxidation activity. The present invention has been made from those viewpoints.

The invention is a catalyst for catalytic partial oxidation of hydrocarbon for use in production of synthetic gas that contains carbon monoxide and hydrogen, through catalytic partial oxidation of a starting hydrocarbon by adding at least oxygen and steam to the starting hydrocarbon that contains methane and light hydrocarbon having at least 2 carbon atoms, which comprises;
a carrier obtained by adding nickel and barium to alumina or an alumina precursor followed by firing it, and
a platinum group element held by the carrier.
The catalyst of another aspect of the invention comprises a carrier obtained by adding nickel and lanthanum to alumina or an alumina precursor followed by firing it, and a platinum group element held by the carrier.
The light hydrocarbon includes, for example, hydrocarbons having at most 6 carbon atoms. The carrier may be obtained by adding nickel, barium and lanthanum to alumina or an alumina carrier followed by firing it.
The platinum group element is, for example, an element selected from rhodium, ruthenium and platinum. The firing temperature in obtaining the carrier is 600°C or higher so as to obtain a nickel aluminate-containing carrier. Nickel aluminate as referred to in this invention is a structure having a morphology of a composite oxide of nickel and aluminium, in which the nickel (Ni) and aluminium (Al) atoms are coordinated via an oxygen atom therebetween. The carrier in producing the catalyst of the invention must contain at least a spinel structure-rich nickel aluminate represented by NiAl2O4, and may contain, along with it, a non-spinel structure metal aluminate or hexa-aluminate. Preferably, the nickel content of the carrier is from 1 to 35 % by weight. Also preferably, the total content of barium and/or lanthanum in the carrier is from 0.1 to 20 % by weight. Also preferably, the total content of barium and/or lanthanum in the carrier is from 0.1 to 20 % by weight. Also preferably, the platinum group element content of the catalyst is from 0.05 to 5.0 % by weight. Also preferably, the platinum group element is so held by the carrier that it is in the form of an oxide, a hydroxide or a metal thereof and at least 60 % of it exists within the region of the depth of at most 1 mm from the surface of the carrier.

The method for producing synthetic gas of the invention comprises;
a step of feeding a starting gas to a reactor, wherein the starting gas comprises a starting hydrocarbon that contains methane and light hydrocarbon having at least 2 carbon atoms, and oxygen and steam added thereto, and the starting gas contains hydrogen as the starting hydrocarbon contains hydrogen and/or hydrogen is added thereto, and
a step of bringing the starting gas into contact under heat with the catalyst of the invention provided in the reactor, to thereby catalytically partially oxidize the starting hydrocarbon to produce a synthetic gas that contains carbon monoxide and hydrogen.

In the method of the invention, the molar number of oxygen/molar number of carbon in the hydrocarbon in the starting gas is, for example, from 0.2 to 0.8, and the molar number of steam/molar number of carbon in the hydrocarbon is, for example, from 0.2 to 0.8. The molar number of hydrogen/molar number of hydrocarbon in the starting gas is, for example, from 0.001 to 0.1.

The starting gas may contain carbon dioxide gas in such a ratio that the molar number of carbon dioxide/molar number of carbon in hydrocarbon is from 0.01 to 0.6. In this case, the carbon dioxide gas recovered from the gas from the outlet port of the reactor is preferably recycled. In the method of the invention, the starting gas may be fed into the reactor with no reduction treatment as the pretreatment of the catalyst, and the catalytic partial oxidation may be started. In one embodiment of the method of the invention, the starting gas is preheated at 200°C to 500°C, then fed into the reactor under the condition of such that the pressure is from normal pressure to 8 MPa and the gaseous hourly space velocity is from 5,000 hr⁻¹ to 500, 000 hr⁻¹, and brought into contact with the catalyst under an adiabatic reaction condition. In the method of the invention, the catalyst does not require reduction for its pretreatment, but the platinum group element for the catalyst may be reduced, for example, at a temperature not higher than 400°C before use of the catalyst.

"Adding at least oxygen and steam to starting hydrocarbon" as referred to in the invention is meant to include a case of adding nitrogen in addition to oxygen and steam thereto, for example, adding air and steam thereto. In this case, "synthetic gas" shall be a gas that contains carbon monoxide and hydrogen and nitrogen, from which carbon monoxide may be removed in a post-treatment step to give a starting gas for synthesis of ammonia.

### [Effect of the Invention]

According to the invention, nickel is added to alumina or an alumina precursor and then fired to give a spinel structure-rich nickel aluminate carrier, to which, in addition, at least one of barium and lanthanum is added. The resulting nickel aluminate carrier is therefore prevented from being sintered in such that it shrinks at a high temperature and its surface area is reduced. Accordingly, since the carrier is prevented from being sintered in the stage of firing it in producing a catalyst with it, and it may carry even a small quantity of a platinum group element as highly dispersed therein. Accordingly, the catalyst may have a high activity and the amount of the expensive platinum group element to be used therein may be reduced. Even in a high-temperature/high-steam partial pressure condition in catalytic partial oxidation, the carrier, nickel aluminate is still prevented from being sintered. In catalytic partial oxidation, steam may be added so as to prevent the formation of a carbonaceous matter on the catalyst, but in general, the presence of steam may accelerate the sintering of the carrier. In this invention, therefore, the carrier may be prevented from being sintered by the presence of steam, and accordingly, the stability of the reaction in a high-temperature/high-steam partial pressure condition can be realized and, as a result, the formation of a carbonaceous matter on the catalyst may be thereby prevented.

In catalytic partial oxidation with a nickel catalyst, the reaction of methane with oxygen accompanied by significant exothermic reaction predominantly goes on to give a nickel oxide (NiO), and since NiO has a high activity for partial oxidation, it may cause a hot spot phenomenon of such that the temperature of the catalyst is abnormally elevated at around the inlet port of the catalyst layer. In the invention, however, since a platinum group element is held by the nickel aluminate-containing carrier, hydrogen and carbon monoxide are first formed by the platinum group element and a reducing atmosphere is thereby formed on the surface of the catalyst, and therefore, the reduction of nickel aluminate may be promoted and the re-oxidation of nickel is prevented by the hydrogen in the starting gas. As a result, since the surface of the catalyst is occupied by a platinum group element and nickel active to partial oxidation and steam reformation, the catalyst may attain stable catalytic partial oxidation and may prevent the phenomenon of hot spot. In that manner, the phenomenon of hot spot is prevented and, as combined with it, the catalyst is prevented from being sintered by addition of barium and/or lanthanum thereto, and, as a result, the catalyst degradation may be effectively prevented owing to the sintering thereof and the carbonaceous matter deposition thereon during a process of catalytic partial oxidation.

From the above, the method for producing a synthetic gas (gas containing carbon monoxide and hydrogen) of the invention that uses the above-mentioned catalyst enables long-term stable catalytic partial oxidation, and it is an extremely effective method for producing a synthetic gas that may be a starting gas for GTL or DME. In the method, since the catalyst stable and highly active even at high temperatures is used, the reactor may be down-sized and the process may be economical. In addition, since the activity of the catalyst is high, the starting gas may be preheated at a low temperature and may be fed into a reactor, in which therefore, the starting gas having a high oxygen concentration may be prevented from spontaneously igniting, and, as a result, the apparatus may be driven stably and may be simplified.

### [Best Mode for Carrying Out the Invention]

The catalyst of the invention for catalytic partial oxidation of hydrocarbon may be produced, for example, as follows. However, the invention should not be limited to the method concretely disclosed herein. First, a powder of an alumina precursor such as boehmite, pseudoboehmite or aluminium hydroxide, or a powder of alumina except α-alumina such as γ, η or χ-alumina is prepared, then the powder is mixed with a powder of, for example, a salt such as nitrate of lanthanum or barium, or an aqueous solution thereof and optionally with a binder serving as a shaping promoter, and water is added to the mixture and the water content of the resulting mixture is controlled. Next, the mixture is put into an extrusion-shaping machine and shaped into a predetermined size through extrusion to give a group of granules having a particle size of, for example, 5 mm; and then these are dried under heat and then fired in an electric furnace, for example, at 600°C for 5 hours. Not specifically defined, the particle size of the granules is preferably at least 3 mm, more preferably at least 5 mm when they are filled in a large-size, for example, industrial-scale apparatus, for the purpose of reducing the pressure loss in the reactor. Apart from such extrusion-shaping, the granules may also be produced through tabletting or rolling granulation, and the shaping method for them is not specifically defined.

The fired product of the lanthanum or barium-added alumina carrier is dipped in a container filled with an aqueous nickel salt solution, for example, an aqueous nickel nitrate solution so that the aqueous solution is infiltrated thereinto, and thereafter the thus-dipped, fired product is dried and then again fired in an electric furnace, for example, at 1100°C for 24 hours. Through the treatment, obtained is a lanthanum (La) or barium (Ba)-added, nickel aluminate-containing carrier.

In place of dipping the fired product in the aqueous nickel salt solution, also preferably usable herein is a method of filling the fired product with an aqueous nickel salt solution of which the concentration is so controlled that the liquid amount thereof could correspond to the water absorption of the lanthanum or barium-added alumina carrier (pore-filling method) . When the amount of nickel to be held by the carrier is large, then the filling operation may be repeated to attain the intended filling result.

Another firing method is also employable herein, for example, comprising previously mixing a nickel salt, a powder of an alumina precursor or alumina, and a salt or oxide of lanthanum or barium along with water added thereto, and firing the resulting mixture to obtain the above-mentioned nickel aluminate-containing carrier.

Next, the nickel aluminate-containing carrier is put into a container, then an aqueous solution of a platinum group element salt such as rhodium nitrate is sprayed onto the carrier with rotating and heating the container, whereby the aqueous solution is infiltrated into the carrier. Next, the carrier is dried, and then fired in an electric furnace, for example, at 600°C for 3 hours to obtain a catalyst of the invention with the platinum group element such as rhodium as held by the carrier.

The lanthanum or barium salt is not limited to a nitrate thereof such as barium nitrate or lanthanum nitrate or to a nitrite thereof, for which, in addition, preferably used are oxides such as barium oxide, lanthanum oxide; hydroxides such as barium hydroxide, lanthanum hydroxide; carbonates such as barium carbonate, lanthanum carbonate; and organic acid salts such as barium acetate, lanthanum acetate.
In addition to nickel nitrate mentioned above, the nickel salt may also be nickel hydroxide or nickel oxide, as well as an organic salt of nickel such as nickel formate, nickel acetate, nickel oxalate. For infiltrating such an aqueous nickel salt solution into the fired product, for example, the fired product may be put into a container and an aqueous nickel salt solution may be sprayed onto it with heating and rotating the container.
Not limited to columnar or spherical granules or tablets, the shape of the catalyst may also be a porous structure such as a honeycomb-like, monolithic, ring-shaped, gauze-like or foamed structure for the purpose of reducing the pressure loss in the reactor filled with it.
In case where a honeycomb or monolithic structure is employed for the catalyst of the invention, the catalyst may be produced, for example, by applying a slurry prepared by mixing a powder or an alumina precursor or alumina with a lanthanum or barium salt and water, to a fireproof inorganic structure such as a metal or ceramic structure, drying and firing it, then dipping it in a nickel salt solution, and thereafter drying and firing it. The method also gives the intended catalyst of the invention where a platinum group element is held by the nickel aluminate-containing carrier. In this case, a nickel salt may be initially mixed with a carrier powder, and the resulting mixture may be fired once to form the intended nickel aluminate, and the catalyst of the invention may be produced in that manner.

For making a platinum group element held by the carrier, herein employable is a coating or pore-filling method that comprises applying an aqueous solution or a solution of a platinum group element to the carrier, or a method of selective adsorption of a platinum group element by the carrier.

Alumina exhibits an excellent stability and an excellent dispersibility of an active metal therein as a carrier, but γ-alumina generally used as a carrier is rearranged into α-alumina having a surface area of at most a few m²/g, under a catalytic partial oxidation condition. In that manner, the alumina carrier undergoes such structural change during reaction and its surface area is thereby greatly reduced, and therefore, even when a platinum group element is held by it while being highly dispersed therein in preparing the catalyst with it, the active point of the catalyst is reduced as a result of the growth of the active metal particles during reaction and the catalytic activity thereof is thereby lowered. When α-alumina is made to initially hold a platinum group element, then it shall carry the element on the extremely small surface thereof, and therefore the platinum group element could not be highly dispersed in the catalyst prepared with the α-alumina carrier.

Catalytic partial oxidation is an extremely high exothermic reaction, and the catalyst for it is exposed to high-temperature/high steam partial pressure. Therefore, it is desirable that the nickel aluminate-containing carrier for the catalyst is previously fired at a high temperature of not lower than 600°C, more preferably not lower than 700°C. However, when a nickel aluminate-containing carrier is fired at such a high temperature, then it may be sintered through thermal treatment for the firing and therefore its surface area may be reduced with the result that the platinum group element dispersibility therein may lower. Accordingly, the nickel aluminate-containing carrier obtained through firing with no addition of lanthanum or barium thereto shall have a small surface area with the result that the dispersibility of a platinum group element held by the carrier having such a small surface area is low and the catalytic activity thereof is low.

As opposed to it, when fired at a high temperature of, for example, not lower than 800°C with lanthanum or barium as combined with nickel added thereto, a nickel aluminate-containing carrier having a large surface area and having good thermal stability can be obtained. The barium or lanthanum-added nickel aluminate-containing carrier is not only stable during heat treatment (in the firing step) in preparing the catalyst with it, but also it is prevented from being sintered during severe catalytic partial oxidation under a high-temperature/high-steam partial pressure condition. Accordingly, since the steam ratio may be increased in a process of catalytic partial oxidation to be effected in the presence of the catalyst, the reaction of carbon deposition on the catalyst may be thereby retarded. The carbon deposition reaction of formulae (6) to (8) described in the section of the background art may occur at the acid point on the surface of the catalyst, and adding basic barium or lanthanum to the catalyst may be effective for suitably controlling the strong acid point of the catalyst. Accordingly, as combined with the increase in the steam ratio therein, it may be said that the catalytic partial oxidation reaction with the catalyst of the invention may effectively inhibit the carbon deposition on the catalyst.
Though its details are not clear, lanthanum and barium may be effective not only for inhibiting the reduction in the surface area of a nickel aluminium-containing carrier but also for increasing the dispersibility and the catalytic activity of a platinum group element held by the carrier. Accordingly, the nickel aluminate carrier with any of them may hold a small quantity of a platinum group element highly dispersed therein. As a result, the necessary amount of the noble metal (platinum group element) to be held by the carrier may be reduced, thereby giving a catalytic partial oxidation catalyst of high activity with the carrier.

In case where the amount of nickel held by the carrier is less than 1 % by weight, then the ratio of nickel to alumina of the carrier is too small to construct a stable spinel-structured nickel aluminate, and if so, in addition, the metal nickel to be formed through reduction is too small to be effective. On the other hand, when the amount of nickel held by the carrier is more than 35 % by weight, then excessive NiO may be formed to lower the heat resistance of the resulting carrier. When a platinum group element is held by a nickel aluminate-containing carrier of which the nickel content is from 1 to 35 % by weight, then a sulfur ingredient that remains in a starting gas in a very small quantity thereof and poisons the platinum group element to lower its activity is adsorbed by the carrier and the reduced nickel at around the gas inlet port of the catalyst layer. Accordingly, the nickel-added carrier has another advantage in that it may prevent the platinum group element in the downstream area of the catalyst layer from being inactivated. More preferably, the amount of nickel held by the carrier is from 3 to 25 % by weight, even more preferably from 5 to 25 % by weight.

Regarding the amount of barium and lanthanum to be added to nickel aluminate, when the amount is less than 0.1 % by weight, then they may be effective; but even when they are added in an amount of more than 20 % by weight, their effect could not so much increase. More preferably, the amount of barium and lanthanum to be added is from 0.5 to 15 % by weight, even more preferably from 1 to 15 % by weight.

The invention should not be limited to the case of adding any one component of barium and lanthanum, but even when both of them are added, they may be effective. However, as will be understood from the experimental result mentioned hereinunder, barium is more effective than lanthanum, and therefore barium is more desirably added to the carrier in the invention. In addition, the invention should not exclude any other case of adding any other component to the carrier in addition to barium and/or lanthanum thereto.

When a platinum group element is held by a lanthanum or barium-added nickel aluminate-containing carrier as in the invention, then the thus-held platinum group element and Ni may be readily reduced, and therefore, even though a starting gas is fed into a reactor with no reduction treatment as the pretreatment of the catalyst therein, its catalytic partial oxidation may be started at 200°C to 400°C.

A report by Dissanayake, et al. says that nickel aluminate is almost inactive to catalytic partial oxidation, and NiO is active for complete oxidation of methane at 400°C to 700°C but is almost inactive to methane reformation. It further says that, at 750°C or higher, however, a part of nickel aluminate is reduced by H₂ and CO formed to give a metal nickel, and shows high activity and selectivity to catalytic partial oxidation of (1) to (5) [Dissanayake et al., Journal of Catalysis, 132, 117-127 (1991)].
As in this report, nickel aluminate is reduced in a high-temperature H₂/CO reductive atmosphere in catalytic partial oxidation to give a metal nickel, and can therefore contribute to the reaction. As a result, the amount of the platinum group element to be used may be reduced, but the oxidation of the starting gas with oxygen and steam must be inhibited. When the starting gas contains no hydrogen, then nickel may be re-oxidized at an inlet port temperature of 500°C or lower.

In the invention, a platinum group element is held by a shaped, hardly-reducible nickel aluminate-containing carrier, and therefore the catalyst is further effective as follows: The catalyst for catalytic partial oxidation is filled in a heat-insulating fixed-bed reactor, and the platinum group element held by the nickel aluminate-containing carrier on the outer surface thereof may be active for starting catalytic partial oxidation even at a low temperature of from 200°C to 500°C. Accordingly, the readily-reducible platinum group element existing on the outer surface of the carrier first undergoes catalytic partial oxidation under an adiabatic condition and the temperature of the catalyst layer is thereby elevated up to 700°C or higher. By CO and H₂ formed through the reaction, a part of the nickel aluminate in the carrier is reduced to be a fine metal nickel, and the metal nickel may keep its reduced condition owing to the low-concentration hydrogen contained in the starting gas. NiO has a strong activity of partial oxidation and is therefore a significant factor of hot spot occurrence, as so mentioned in the section of the background art. Accordingly, when the formation of NiO could be reduced and when a hot spot is thereby retarded, then the addition of a platinum group element to nickel aluminate may contribute to the progress of stable reformation reaction.

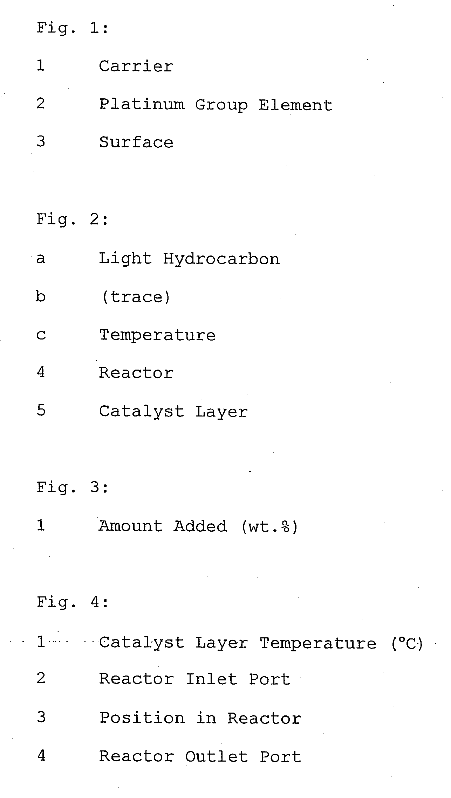

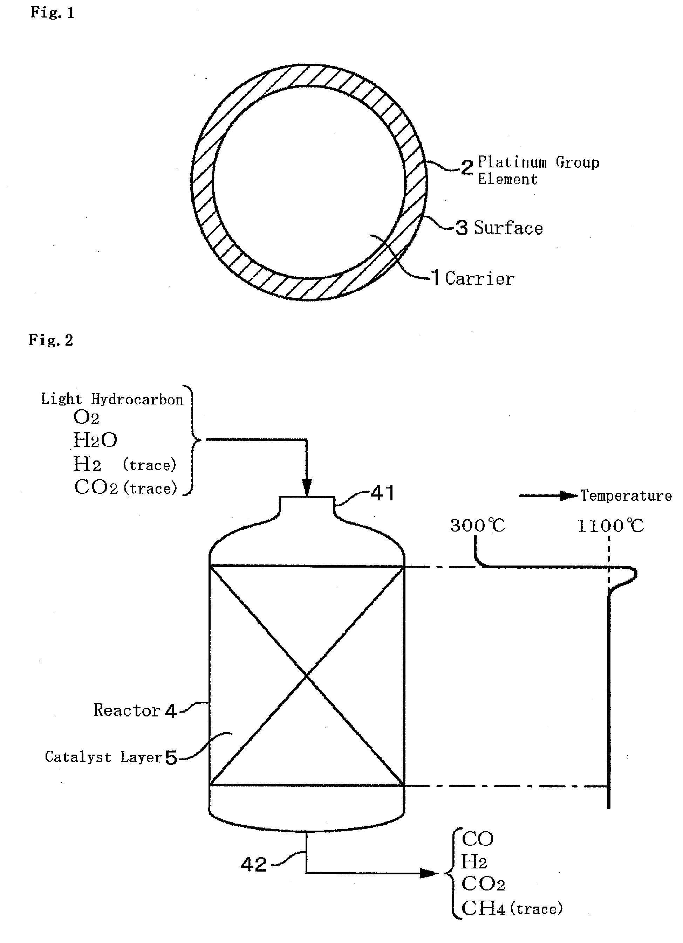

In making a platinum group element held by a shaped, nickel aluminate-containing carrier, it is desirable that a large quantity of the platinum group element 2 may exist in the shallow region from the surface of the carrier 1, as in Fig. 1. For example, when the particle size of the carrier 1 is from 3 to 5 mm, then the catalyst is preferably so constituted that at least 60 % of all the platinum group element 2 may exist in the depth of at most 1 mm from the surface 3 of the carrier 1. For making the platinum group element 2 held by the carrier in that manner, employable is a method of applying a solution or an aqueous solution of a platinum group element to a carrier, or a method of making a platinum group element selectively adsorbed by a carrier, as so mentioned hereinabove. Another method also employable for it comprises infiltrating an alkali solution such as a sodium nitrate solution to a carrier, drying and firing the carrier, and thereafter dipping the carrier in a solution of a metal salt of a platinum group element such as an aqueous rhodium nitrate solution to thereby make the alkali react with the metal salt on the carrier so as to fix the platinum group element on the surface of the carrier. The platinum group element is preferably rhodium (Rh), ruthenium (Ru) or platinum (Pt), more preferably rhodium. When the platinum group element content of the catalyst is less than 0.05 % by weight, then the activity thereof is low and therefore the reactor shall be large; but when the content is more than 5 % by weight, then the catalyst is too expensive and the active metal dispersibility in the catalyst may be poor, and therefore it is uneconomical. Preferably, the platinum group element content of the catalyst is from 0.1 to 3 % by weight, more preferably from 0.1 to 2 % by weight.

Fig. 2 is a view schematically showing a device for producing a synthetic gas by the use of the catalyst of the invention. 4 is a cylindrical reactor, which is filled with a catalyst of the invention to form a catalyst layer 5. In this device, a starting gas prepared by adding oxygen, steam and carbon dioxide to a starting material of light hydrocarbon is fed into the reactor 4 through the inlet port 41 at the top thereof, then this is led to pass through the catalyst layer 5 to be subjected to partial oxidation therethrough, and a synthetic gas is taken out through the outlet port 42 at the bottom of the reactor 4.

For preventing the re-oxidation of NiO, hydrogen must be contained in the starting gas in a molar ratio of hydrogen to hydrocarbon (hydrogen/hydrocarbon) of from 0.001 to 0.1. However, when the starting hydrocarbon is processed in a pretreatment desulfurization reactor and when the hydrogen concentration after the treatment is within the range, then adding hydrogen to the starting gas is unnecessary and the hydrocarbon after desulfurization may be directly fed to the partial oxidation reactor. In case where the starting hydrocarbon does not contain hydrogen, then hydrogen may be added thereto.

The starting hydrocarbon after desulfurization may be reformed with low-temperature steam to thereby convert the hydrocarbon having at least 2 carbon atoms into methane and hydrogen, and then it may be subjected to catalytic partial oxidation, as in Japanese Patent Application No. 2004-298971.

When the amount of the starting as is too small, then the starting hydrocarbon could not be processed for partial oxidation but may be directly discharged out as it is; but on the contrary, when the amount is too large, then the peak temperature of the catalyst layer may be too high and the catalyst degradation may be thereby promoted. Accordingly, the oxygen content is preferably such that the molar number of oxygen/molar number of carbon in the hydrocarbon is from 0.2 to 0.8. For preventing carbon deposition on the catalyst surface, steam must be introduced into the reactor; but the amount of steam introduced is too large, then the catalyst sintering may be promoted. Therefore, the steam content in the reactor is preferably such that the molar number of steam/the molar number of carbon in hydrocarbon is from 0.2 to 0.8.
For promoting the reaction of formula (5) shown in the section of the background art and for increasing the yield of the product, synthetic gas, it is desirable that the starting gas contains carbon dioxide. The carbon dioxide content of the starting gas is preferably such that the molar number of carbon dioxide/molar number of carbon in hydrocarbon is from 0.01 to 0.6, more preferably from 0.1 to 0.3.

The starting gas is pre-heated, for example, at 200°C to 500°C, and then fed into the reactor 4, and the pressure at the inlet port 41 of the reactor 4 is, for example, from normal pressure to 8 MPa. The gaseous hourly space velocity (GHSV) is, for example, preferably from 5, 000 hr⁻¹ to 500, 000 hr⁻¹, more preferably from 20,000 hr⁻¹ to 200,000 hr⁻¹.
When a starting gas is fed into the reactor 4, then it undergoes the oxidation of formula (1) and formula (2) shown in the section of the background art, thereby causing significant heat generation at the inlet port to the catalyst layer 5, at which, therefore, the temperature is elevated. Then, on the downstream side from the inlet port of the catalyst layer 5, the reaction of the above-mentioned formulae (1) to (5) goes on simultaneously to reach a composition of equilibrium. Accordingly, the temperature of the catalyst layer 5 stabilizes at the equilibrium temperature of the outlet gas composition that is determined by the composition of the starting gas and the reaction pressure, for example, at about 1100°C. At the outlet port 42 of the reactor 4, obtained is a gas of which the composition is determined by the equilibrium at 1100°C, or that is, a synthetic gas mostly comprising oxygen monoxide and hydrogen. The synthetic gas contains carbon dioxide, but in the later step of the process, carbon dioxide is separated from the synthetic gas and this carbon dioxide is added to the starting gas and fed to the reactor 4, and accordingly, carbon dioxide is recycled in that manner.
As in the above, since the catalyst of the invention is highly active at low temperatures, the starting gas may be fed to the reactor 4 at a low temperature, and therefore in the invention, it is possible to prevent spontaneous ignition of a starting gas having a high oxygen concentration and the safety in process planning may be increased.
Further in the invention, since a metal nickel capable of contributing to catalytic partial oxidation on the catalyst surface is formed during reaction, the amount of the expensive platinum group element to be added to the catalyst may be reduced, and the catalyst for catalytic partial oxidation is produced at low costs.

In producing the catalyst for catalytic partial oxidation of the invention, when the starting gas contains a chlorine component and when the fired catalyst still contains a certain concentration of chlorine remaining therein, then there may occur stress corrosion cracking and wall-thinning corrosion at the pipelines and the instruments below the downstream of the reactor in which the temperature may be a dew point or lower. Accordingly, it is desirable that the starting materials for producing the catalytic partial oxidation catalyst of the invention does not contain chlorine, or chlorine is removed from the starting materials. Chlorine remaining in the catalyst results from barium, lanthanum, platinum group element and nickel materials. Accordingly, when hydroxides, nitrates or organic acid salts are used as the starting materials, then it is possible to produce a catalytic partial oxidation catalyst not containing chlorine. In case where rhodium chloride or ruthenium chloride is used, for example, as the platinum group element material, then a method may be employed that comprises removing chlorine in the step of making the platinum group element held by a catalyst carrier. Removing chlorine may be attained according to the method disclosed in JP-A 60-190240, but may also be attained according to a method of washing the catalyst with an aqueous alkaline solution.

The synthetic gas produced by the use of the catalyst of the invention as in the above is not limited to the starting material for GTL and DME, therefore including a gas that is used as a starting material for producing ammonia gas. In this case, for example, air may be used in place of the pure oxygen from an oxygen plant, and air and stream may be added to the starting hydrocarbon to thereby obtain a synthetic gas that comprises hydrogen, nitrogen and carbon monoxide. The synthetic gas may be a starting material for ammonia, after carbon monoxide is removed from it in the later step.

### [Examples]

### (Preparation of Catalyst)

### a. Preparation of Nickel Aluminate-Containing Catalyst:

200 g of Cerander (by Yuken Industry), a shaping promoter was added to 2, 000 g (1, 500 g as Al₂O₃) of pseudoboehmite powder (Shokubai Kasei Kogyo's trade name: Cataloid-AP), and kneaded in a kneader with controlling the water content of the resulting mixture, and then shaped through 2.5 mmφ-extrusion. The extruded product was cut into about 2 mm pellets, then rounded into spherical pellets with a marumerizer. The thus-shaped pellets were heated and dried, and then fired in an electric furnace at 600°C for 5 hours, and thereafter 600 cc of an aqueous solution of 568 g of nickel nitrate 6-hydrate (by Wako Pure Chemical Industries) was infiltrated into 1, 000 g of the shaped alumina at room temperature.
Next, this was dried, and then fired at 1,100°C for 24 hours to prepare a catalyst A containing 10 % by weight of Ni. The catalyst A has a cobalt blue color intrinsic to spinel-type nickel aluminate, and from its X-ray diffractiometry, the formation of spinel-type nickel aluminate therein was confirmed.

### b. Preparation of Lanthanum-Added Nickel Aluminate-Containing Catalyst:

An aqueous solution of 57 g of lanthanum nitrate 6-hydrate (by Wako Pure Chemical Industries) and the above-mentioned shaping promoter were added to 2, 000 g of pseudoboehmite powder, and after the water content thereof was controlled, the mixture was shaped and processed in the same manner as above. Next, this was dried and then fired at 600°C for 5 hours to obtain a carrier alumina. The carrier contains lanthanum, and the lanthanum content thereof was 1.2 % by weight. 600 cc of an aqueous solution of 576 g of nickel nitrate 6-hydrate was infiltrated into 1,000 g of the lanthanum-containing shaped carrier at room temperature, and then dried. After dried, this was fired at 1, 100°C for 24 hours to prepare a catalyst A containing 10 % by weight of Ni and 1.0 % by weight of lanthanum.
In the same manner but varying the lanthanum content thereof, catalysts C, D, E, F, G and H were prepared, each containing 2 % by weight, 3 % by weight, 4 % by weight, 5 % by weight, 10 % by weight or 15 % by weight of lanthanum and 10 % by weight of Ni.

### c. Preparation of Barium-Added Nickel Aluminate-Containing Catalyst:

An aqueous solution of 35 g of barium nitrate (by Wako Pure Chemical Industries) and the above-mentioned shaping promoter were added to 2,000 g of pseudoboehmite powder, and after the water content thereof was controlled, the mixture was shaped and processed in the same manner as above. Next, this was dried and then fired at 600°C for 5 hours to obtain a carrier alumina. The carrier contains barium, and the barium content thereof was 1.2 % by weight. Like to the catalyst B, 600 cc of an aqueous solution of 575 g of nickel nitrate 6-hydrate was infiltrated into 1,000 g of the barium-containing carrier, and then this was dried and fired to obtain a catalyst I containing 10 % by weight of Ni and 1.0 % by weight of barium. In the same manner but varying the barium content thereof, catalysts J, K, L, M, N and O were prepared, each containing 10 % by weight of Ni and 2, 3, 4, 5, 10 or 15 % by weight of barium.
For the catalysts M, N and 0 having a barium content of 5 % or more, the aqueous barium nitrate solution was divided into plural parts and separately added in plural times to the mixture with heating an mixing in a kneader, since the solubility of barium nitrate is low.

### d. Preparation of Platinum Group Element-Carrying Catalyst:

The catalyst A containing 10 % by weight of Ni was put into a beaker, and with heating and rotating the beaker, an aqueous rhodium nitrate solution (by Tanaka Noble Metal) was sprayed into the beaker (according to a spraying method) so as to be infiltrated into the catalyst A. Then, the catalyst was dried and fired at 800°C to obtain a catalyst R. The catalyst R contained 0.5 % by weight or Rh.
In the same manner, an aqueous rhodium nitrate solution was infiltrated into the catalyst D containing 3 % by weight of lanthanum and 10 % by weight of Ni. Then, the catalyst was dried and fired at 800°C to obtain a catalyst S containing 0.5 % by weight of Rh.

In the same manner, an aqueous rhodium nitrate solution was infiltrated into the catalyst K containing 3 % by weight of barium. Then, the catalyst was dried and fired at 800°C to obtain a catalyst T containing 0.5 % by weight of Rh.

In the same manner, an aqueous ruthenium nitrate solution (by Tanaka Noble Metal) was infiltrated into the catalyst K. Then, the catalyst was dried and fired in a nitrogen atmosphere at 800°C to obtain a catalyst U containing 0.5 % by weight of Ru.
In the same manner, a dinitrodiammine platinum nitrate solution (by Tanaka Noble Metal) was infiltrated into the catalyst K. Then, the catalyst was dried and fired in air at 800°C to obtain a catalyst V containing 0.5 % by weight of Pt.
The catalysts R, S, T, U and V were analyzed through EPMA (Electron Probe Micro Analysis), which confirmed that Rh, Ru and Pt were held by the carrier in each catalyst in such a manner that at least 90 % thereof was within 0.4 mm from the surface of the carrier to coat the carrier surface.

An aqueous solution of 167 g of cerium nitrate 6-hydrate (by Wako Pure Chemical Industries) and the above-mentioned shaping promoter were added to 2, 000 g of pseudoboehmite powder, then the water content of the mixture was controlled, and this was shaped and processed into spherical pellets like the catalyst B. Next, this was dried and then fired in air at 600°C for 5 hours to obtain a carrier alumina. Like to the catalyst B, 600 cc of an aqueous solution of 593 g of nickel nitrate 6-hydrate was infiltrated into 1,000 g of the Ce-containing shaped carrier. Next, the carrier was dried and then fired to prepare a nickel aluminate-containing catalyst P with 10 % by weight of Ni and 3.0 % by weight of Ce added thereto. Like to the catalyst R, an aqueous rhodium nitrate solution was infiltrated into the catalyst P, and then this was dried and fired to obtain a catalyst W carrying 0.5 % by weight or Rh.

An aqueous solution of 68 g of barium nitrate (by Wako Pure Chemical Industries), an aqueous solution of 56 g of lanthanum nitrate 6-hydrate (by Wako Pure Chemical Industries) and the above-mentioned shaping promoter were added to 2,000 g of pseudoboehmite powder, then with controlling the water content of the mixture, this was kneaded in a kneader. Next, like the catalyst B, this was shaped and processed into spherical pellets, and then fired. Like to the catalyst B, 600 cc of an aqueous solution of 590 g of nickel nitrate 6-hydrate was infiltrated into 1,000 g of the barium and lanthanum-containing carrier. Next, the carrier was dried and then fired in the same manner as above to prepare a nickel aluminate-containing catalyst Q with 10 % by weight of Ni, 2.0% by weight of barium and 1. 0 % by weight of lanthanum added thereto. Like to the catalyst R, an aqueous rhodium nitrate solution was infiltrated into the catalyst Q, and then this was dried and fired to obtain a catalyst X carrying 0.5 % by weight or Rh.
Before having carried a platinum group element, the color of each catalyst with barium and lanthanum added thereto is intrinsic to spinel-type nickel aluminate; and as a result of X-ray diffractiometry of the catalysts, diffraction lines of NiAl₂O₄ and additionally NiAl₁₀O₁₆ were confirmed.

Like to the catalyst R, a mixture of an aqueous rhodium nitrate solution and a dinitrodiammine platinum nitrate solution having a predetermined concentration was sprayed onto the catalyst K containing 10 % by weight of Ni and 3 % by weight of barium, and the resulting catalyst was dried and then fired at 800°C to obtain a catalyst Y containing 0.4 % by weight of Rh and 0.1 % by weight of Pt.

The composition of each catalyst is shown in Table 1 and Table 2.

**[Table 1]**

| Composition of Catalyst not carrying platinum group element | | | | |
|---|---|---|---|---|
| Catalyst Code | La (wt.%) | Ba (wt.%) | Ce(wt.%) | Ni (wt.%) |
| A | 0 | 0 | 0 | 10 |
| B | 1 | 0 | 0 | 10 |
| C | 2 | 0 | 0 | 10 |
| D | 3 | 0 | 0 | 10 |
| E | 4 | 0 | 0 | 10 |
| F | 5 | 0 | 0 | 10 |
| G | 10 | 0 | 0 | 10 |
| H | 15 | 0 | 0 | 10 |
| I | 0 | 1 | 0 | 10 |
| J | 0 | 2 | 0 | 10 |
| K | 0 | 3 | 0 | 10 |
| L | 0 | 4 | 0 | 10 |
| M | 0 | 5 | 0 | 10 |
| N | 0 | 10 | 0 | 10 |
| O | 0 | 15 | 0 | 10 |
| P | 0 | 0 | 3 | 10 |
| Q | 1 | 2 | 0 | 10 |

**[Table 2]**

| Composition of Catalyst carrying platinum group element | | | | | |
|---|---|---|---|---|---|
| Catalyst Code | La (wt.%) | Ba (wt.%) | Ce (wt.%) | Ni(wt.%) | platinum group element (wt.%) |
| R | 0 | 0 | 0 | 10 | 0.5 (Rh) |
| S | 3 | 0 | 0 | 10 | 0.5 (Rh) |
| T | 0 | 3 | 0 | 10 | 0.5 (Rh) |
| U | 0 | 3 | 0 | 10 | 0.5 (Ru) |
| V | 0 | 3 | 0 | 10 | 0.5 (Pt) |
| W | 0 | 0 | 3 | . 10 | 0.5 (Rh) |
| X | 1 | 2 | 0 | 10 | 0.5 (Rh) |
| Y | 0 | 3 | 0 | 10 | 0.4 (Rh), 0.1 (Pt) |

### (Comparison of Surface Area of Catalyst)

The BET specific surface area of the catalyst A with neither lanthanum nor barium added thereto was 6.2 (m²/g). The largest BET specific surface area of the lanthanum-added catalyst was 63 (m²/g); and the largest BET specific surface area of the barium-added catalyst was 59 (m²/g). The BET specific surface area of each catalyst is represented by S. For the lanthanum-added catalysts, the ratio of S/S0 in which S0 indicates the above-mentioned 63 (m²/g), and for the barium-added-catalysts, the ratio of S/SO in which SO indicates the above-mentioned 59 (m²/g) are shown in Fig. 3. As in Fig. 3, when lanthanum and barium are added to a nickel aluminate-containing carrier, then the carrier can still keep a large surface area even after the firing treatment at 1, 110°C.
Accordingly, it is understood that the addition of lanthanum and barium inhibits the sintering in high-temperature firing in the step of preparing catalysts. The BET specific surface area of the Ce-added catalyst P was 11 (m²/g).

### (Test for Catalytic Partial Oxidation (CPO))

### a. Premise Condition in Test:

1.4 cc of a catalyst was filled into a Hastelloy reactor tube having an inner diameter of 14 mmφ, and tested for catalytic partial oxidation. A sheath tube having an outer diameter of 3 mmφ and an inner diameter of 2 mmφ was inserted into the reactor for measuring the temperature in the catalyst layer, with which the temperature was measured. The length of the catalyst layer was about 1.0 cm. The reactor tube was set in a sand-fluid bath uniformly heated at a predetermined temperature.
A mixed gas having the following composition was used as the starting hydrocarbon.

| | |
|---|---|
| CH4: 88.6 vol.%, | C2H6: 7.2 vol.% |
| C3H8: 3.0 vol.%, | i-C4H10: 1.2 vol.% |

Oxygen was mixed with a mixed gas comprising the hydrocarbon of the above-mentioned composition, hydrogen and steam to prepare a starting gas, and this was fed into the reactor. For preventing spontaneous ignition thereof, the starting gas was mixed and preheated at a high linear velocity in a SUS tube having an outer diameter of 6 mmφ and an inner diameter of 4 mmφ, and then fed into the reactor. The gas at the outlet of the reactor was cooled and subj ected to vapor-liquid separation, and then its flow rate was determined and its composition was analyzed through gas chromatography to obtain the conversion and the selectivity thereof. With every catalyst, the reaction was for 10 hours.

### b. Comparative Examples:

### [Comparative Example 1]

The catalyst A was filled into the reactor tube, and not subjected to preliminary reduction treatment, it was heated in the sand-fluid bath up to 270°C in a nitrogen atmosphere under 0.3 MPa. After thus heated, a mixed gas was introduced into the reactor tube to initiate CPO. The mixed gas had a molar ratio of oxygen/carbon in hydrocarbon = 0.6/1, a molar ratio of steam/carbon in hydrocarbon = 0.6/1, and a molar ratio of hydrogen/hydrocarbon = 0.02/1; and its GHSV (gaseous hourly space velocity) was 170,000 hr⁻¹ as the overall gas flow rate. In this stage, the flow rate of each component was as follows:
Starting hydrocarbon gas: 97.4 (NL/h)
Oxygen: 68.3 (NL/h)
H2O: 55 g/h
H2: 1.9 (NL/h)
One hour after the start of the test, the temperature profile of the catalyst layer was analyzed, and no heat generation was observed at all. From the composition of the outlet port gas, it was confirmed that not only C1 to C4 hydrocarbons in the starting gas but also oxygen and hydrogen were not reacted at all.
The molar ratio of hydrogen to hydrocarbon (hydrogen/hydrocarbon) was increased up to 0.08, but CPO did not start. Then, the sand-fluid bath was heated up to 300°C and the molar ratio of hydrogen to hydrocarbon was increased from 0.02 to 0.8, but CPO did not occur.

### [Comparative Example 2]

In Comparative Example 1, the catalyst A was filled into the reactor and then subjected to preliminary reduction for 24 hours while a mixed gas (temperature 300°C, pressure 0.3 MPa, GHSV = 10, 000 hr⁻¹, molar ratio of hydrogen/nitrogen = 1/9) was led to pass through it. After the reduction, the catalyst was tested for CPO at 270°C in the same manner as in Comparative Example 1.
One hour after the start of the test, the temperature profile of the catalyst layer was analyzed, and heat generation by about 2 to 3°C was recognized. The composition at the outlet port of the reactor was analyzed, and as a result, it was confirmed that no hydrocarbon was reacted at all but only some hydrogen and oxygen in the starting material were reacted. In the gas at the outlet port of the reactor, neither CO nor CO₂ was detected. Like in Comparative Example 1, the temperature of the sand-fluid bath was changed to 300°C and the hydrogen amount was increased, but CPO did not start.

### [Comparative Example 3]

In the same manner as in Comparative Example 1, the catalyst D was filled into a reactor and tested for CPO at 270°C. The molar ratio of hydrogen to hydrocarbon was increased from 0.02 to 0.08 and the starting gas was fed into the reactor, but little heat generation was observed and CPO did not occur. The sand-fluid bath temperature was changed to 300°C and the molar ratio of hydrogen to hydrocarbon was changed to 0.02, and the test was again tried in that condition. After 1 hour, heat generation by about 10°C was admitted at the outlet port of the catalyst layer, but neither CO nor CO₂ was detected in the gas from the outlet port of the reactor. Only a part of hydrogen (0.8 vol.% concentration) contained in the starting gas was consumed for combustion with oxygen, but CPO did not occur at all. Then, the molar ratio of hydrogen to hydrocarbon was further increased up to 0.08, but no CPO occurred in the test under the condition.

### [Comparative Example 4]

In the same manner as in Comparative Example 1, the catalyst R was filled into a reactor and tested for CPO at 270°C. The molar ratio of hydrogen to hydrocarbon was increased from 0.02 to 0.08, whereupon heat generation was found through hydrogen combustion but CPO did not start. Then, the sand-fluid bath temperature was elevated up to 300°C, whereupon CPO started at a molar ratio of hydrogen to hydrocarbon = 0.06. After the confirmation of the start of the reaction, the molar ratio of hydrogen to hydrocarbon was controlled to 0.02, and the test for CPO was continued at 270°C. After 2 hours, the maximum temperature in the catalyst layer was 1,016°C. As a result of the analysis of the outlet port gas, the oxygen conversion was 100 %, but unreacted C2H6, C3H8 and i-C4H10 were detected. The carbon amount of the catalyst after the reaction was measured, and was 0.3 % by weight. This means carbon deposition on the catalyst.

### [Comparative Example 5]

In the same manner as in Comparative Example 1, the catalyst W was filled into a reactor, and a starting gas was fed thereinto at 270°C. The molar ratio of hydrogen to hydrocarbon was increased from 0.02 to 0.08, but CPO did not start. Then, the sand-fluid bath temperature was elevated up to 300°C, and CPO started when the molar ratio of hydrogen to hydrocarbon was 0.04. After the start of the reaction was confirmed, the molar ratio of hydrogen to hydrocarbon was restored to 0.02, and CPO was continued at 270°C.
After 2 hours, the maximum temperature in the catalyst layer was 1,011°C. As a result of the analysis of the outlet port gas, oxygen was reacted 100 %, but unreacted hydrocarbons of C2 or more were detected. 10 hours after the reaction, the catalyst was analyzed, and its carbon content was 0.5 % by weight.

### c. Examples:

### [Example 1]

In the same manner as in Comparative Example 1, the catalyst S was filled into a reactor, and tested for CPO under a condition of 270°C and 0.3 MPa. Under a standard condition at a molar ratio of hydrogen to hydrocarbon =0.02, CPO started. After 10 hours, the maximum temperature in the catalyst layer was 1,097°C, and the conversion of oxygen and hydrocarbons of C2 or more was all 100 %. After the reaction, the carbon amount of the catalyst was measured, and was 0.02 % by weight. This means no carbonaceous matter deposition on the catalyst.

### [Example 2]

In the same manner as in Example 1, the catalyst T was filled into a reactor, and tested for CPO under a condition of 270°C and 0.3 MPa. Under a standard condition at a molar ratio of hydrogen to hydrocarbon = 0.02, CPO started. Oxygen and hydrocarbons of C2 or more were consumed 100 % through the reaction, and did not detected in the outlet port gas. 10 hours after the start of the reaction, the maximum temperature in the catalyst layer was 1, 053°C, and there was no change in the outlet port gas during the reaction. After the reaction, the carbon amount of the catalyst was 0.01 % by weight.

### [Example 3]

In the same manner as in Example 1, the catalyst U was filled into a reactor, and tested for CPO under a condition of 270°C and 0.3 MPa. Under a standard condition at a molar ratio of hydrogen to hydrocarbon = 0.02, CPO started. Unreacted oxygen and hydrocarbons of C2 or more were not detected in the outlet port gas, and the conversion of the reactants was all 100 % with no degradation of the catalyst during the reaction. 10 hours after the start of the reaction, the maximum temperature in the catalyst layer was 1,057°C. After the reaction, the carbon amount of the catalyst was 0.02 % by weight.

### [Example 4]

In the same manner as in Example 1, the catalyst V was filled into a reactor, and tested for CPO under a condition of 270°C and 0.3 MPa. Under a standard condition at a molar ratio of hydrogen to hydrocarbon = 0.02, CPO started. Unreacted oxygen and hydrocarbons of C2 or more were not detected in the outlet port gas, and the conversion of the reactants was 100 %. After 10 hours, the maximum temperature in the catalyst layer was 1,096°C, and no degradation of the catalyst was seen during the reaction. After the reaction, the carbon amount of the catalyst was 0.03 % by weight.

### [Example 5]

In the same manner as in Example 1, the catalyst X was filled into a reactor, and tested for CPO under a condition of 270°C and 0.3 MPa. Under a standard condition at a molar ratio of hydrogen to hydrocarbon = 0.02, CPO started. Unreacted oxygen and hydrocarbons of C2 or more were not detected in the outlet port gas, and the conversion of the reactants was 100 %. After 10 hours, the maximum temperature in the catalyst layer was 1, 075°C, and no degradation of the catalyst was seen during the reaction. After the reaction, the carbon amount of the catalyst was 0.02 % by weight.

### [Example 6]

In the same manner as in Example 1, the catalyst Y was filled into a reactor, and tested for CPO under a condition of 270°C and 0.3 MPa. Under a standard condition at a molar ratio of hydrogen to hydrocarbon = 0.02, CPO started. Unreacted oxygen and hydrocarbons of C2 or more were not detected in the outlet port gas, and the conversion of the reactants was 100 %. After 10 hours, the maximum temperature in the catalyst layer was 1, 063°C, and no degradation of the catalyst was seen during the reaction. After the reaction, the carbon amount of the catalyst was 0.02 % by weight.

In all the above-mentioned Examples 1 to 6, no change was seen in the maximum temperature in the catalyst layer. The site having the maximum temperature in the catalyst layer was nearly in the center of the length of the catalyst layer, and this did not move during the test. After the test, the catalyst was observed, and no carbonaceous matter deposition thereon was seen. The gas composition at the outlet port was the equilibrium composition at the temperature at the outlet port of the catalyst layer.

### d. Test Results and Considerations:

The results such as the conversion of oxygen and the conversion of hydrocarbon are shown in Table 3 to Table 6.

**[Table 3]**

| CPO Reaction Test Results (reaction pressure: 0.3 MPa, gas inlet port temperature: 270°C, GHSV = 170,000 hr-1) | | | | |
|---|---|---|---|---|
| | Comparative Example 4 (Catalyst R) | | Comparative Example 5 (Catalyst W) | |
| oxygen/carbon molar ratio | 0.6 | → | 0.6 | → |
| steam/carbon molar ratio | 0.6 | → | 0.6 | → |
| hydrogen/hydrocarbon molar ratio | 0.02 | → | 0 | → |
| reaction time (hrs) | 2 | 10 | 2 | 10 |
| 02 conversion (%) | 100 | 100 | 100 | 99.8 |
| CH4 conversion (%) | 70.3 | 68.5 | 67.6 | 62.9 |
| C2H6 conversion (%) | 86.1 | 84.3 | 82.9 | 77.5 |
| C3H8 conversion (%) | 92.6 | 90.5 | 90.2 | 84.1 |
| i-C4H10 conversion (%) | 95.2 | 94.1 | 93.4 | 86.5 |
| maximum temperature in catalyst layer (°C) | 1016 | 1010 | 1011 | 1006 |

**[Table 4]**

| CPO Reaction Test Results (reaction pressure: 0.3 MPa, gas inlet port temperature: 270°C, GHSV = 170,000 hr⁻¹) | | | | |
|---|---|---|---|---|
| | Example 1 (Catalyst S) | | Example 2 (Catalyst T) | |
| oxygen/carbon molar ratio | 0.6 | → | 0.6 | → |
| steam/carbon molar ratio | 0.6 | → | 0.6 | → |
| hydrogen/hydrocarbon molar ratio | 0.02 | → | 0.02 | → |
| reaction time (hrs) | 2 | 10 | 2 | 10 |
| 02 conversion (%) | 100 | 100 | 100 | 100 |
| CH4 conversion (%) | 99.8 | 99.8 | 99.8 | 99.8 |
| C2H6 conversion (%) | 100 | 100 | 100 | 100 |
| C3H8 conversion (%) | 100 | 100 | 100 | 100 |
| i-C4H10 conversion (%) | 100 | 100 | 100 | 100 |
| maximum temperature in catalyst layer (°C) | 1096 | 1097 | 1055 | 1053 |

**[Table 5]**

| CPO Reaction Test Results (reaction pressure: 0.3 MPa, gas inlet port temperature: 270°C, GHSV = 170,000 hr⁻¹) | | | | |
|---|---|---|---|---|
| | Example 3 (Catalyst U) | | Example 4 (Catalyst V) | |
| oxygen/carbon molar ratio | 0.6 | → | 0.6 | → |
| steam/carbon molar ratio | 0.6 | → | 0.6 | → |
| hydrogen/hydrocarbon molar ratio | 0.02 | → | 0.02 | → |
| reaction time (hrs) | 2 | 10 | 2 | 10 |
| 02 conversion (%) | 100 | 100 | 100 | 100 |
| CH4 conversion (%) | 99.7 | 99.7 | 99.9 | 99.9 |
| C2H6 conversion (%) | 100 | 100 | 100 | 100 |
| C3H8 conversion (%) | 100 | 100 | 100 | 100 |
| i-C4H10 conversion (%) | 100 | 100 | 100 | 100 |
| maximum temperature in catalyst layer (°C) | 1052 | 1057 | 1100 | 1096 |

**[Table 6]**

| CPO Reaction Test Results (reaction pressure: 0.3 MPa, gas inlet port temperature: 270°C, GHSV = 170,000 hr⁻¹) | | | | |
|---|---|---|---|---|
| | Example 5 (Catalyst X) | | Example 6 (Catalyst Y) | |
| oxygen/carbon molar ratio | 0.6 | → | 0.6 | → |
| steam/carbon molar ratio | 0.6 | → | 0.6 | → |
| hydrogen/hydrocarbon molar ratio | 0.02 | → | 0.02 | → |
| reaction time (hrs) | 2 | 10 | 2 | 10 |
| 02 conversion (%) | 100 | 100 | 100 | 100 |
| CH4 conversion (%) | 99.8 | 99.8 | 99.8 | 99.8 |
| C2H6 conversion (%) | 100 | 100 | 100 | 100 |
| C3H8 conversion (%) | 100 | 100 | 100 | 100 |
| i-C4H10 conversion (%) | 100 | 100 | 100 | 100 |
| maximum temperature in catalyst layer (°C) | 1078 | 1075 | 1063 | 1063 |

Table 3 shows the results in Comparative Examples 4 and 5 where CPO started. Table 4 shows the results in Examples 1 and 2; Table 5 shows the results in Examples 3 and 4; Table 6 shows the results in Examples 5 and 6. In the Examples and the Comparative Examples in the Tables, the left column shows the results in 2 hours after the start of the test, and the right column shows the results in 10 hours after the start of the test.

In Comparative Examples 1 to 3 where catalysts with no platinum group element added thereto were used, CPO reaction did not occur. In Comparative Examples 4 and 5 where a platinum group element was used, CPO occurred. In these, however, the hydrocarbon conversion was low, and in particular, it is seen that hydrocarbons of C2 or more which are highly reactive were unreacted and detected in the reactor outlet port gas. This means that the catalytic activity for CPO of the catalysts used in these is low. As opposed to these, in Examples 1 to 6 where catalysts containing barium or lanthanum and a platinum group element, the oxygen and hydrocarbon conversion was 100 % or the product gas had an equilibrium composition. As barium or lanthanum was added thereto, the surface area of the nickel aluminate-containing carrier was kept still large even after the carrier was fired at a high temperature, and in addition, the active species, platinum group element can be highly dispersed in the catalyst and the catalyst can keep high activity and high selectivity to CPO reaction. Further, it is understood that the catalyst is effective for preventing the formation of a carbonaceous matter during reaction under a high-temperature/high-steam partial pressure condition.

In addition, in Examples 1 to 6, the maximum temperature in the catalyst layer was nearly at the center of the length of the catalyst layer, and the position did not move or the maximum temperature did not rise during the test period. This means that the activity of the catalyst of the invention with barium or lanthanum added thereto is extremely stable, not causing hot spot occurrence, and the catalyst is an excellent CPO catalyst.
In Examples 1 and 2, the gas from the outlet of the reactor was analyzed for its composition, and the results are shown in Table 7.

**[Table 7]**

| CPO Reaction Test Results (reaction pressure: 0.3 MPa, gas inlet port temperature: 270°C, GHSV = 170,000 hr⁻¹) | | |
|---|---|---|
| Composition of Reactor Outlet Gas | Example 1 (Catalyst S) | Example 2 (Catalyst T) |
| CH4 (vol. %) | 0.05 | 0.07 |
| H2 (vol. %) | 64.61 | 64.66 |
| CO (vol. %) | 28.89 | 28.61 |
| CO2 (vol. %) | 6.46 | 6.66 |

The composition of the outlet gas is nearly the equilibrium composition corresponding to the outlet port temperature (from 940°C to 980°C) of the catalyst layer, and this indicates the performance of sufficient CPO with the catalyst.

### [Brief Description of the Drawings]

[Fig. 1] It is an explanatory view showing the condition that a platinum group element exists in a high concentration in and around the surface of the carrier in the catalyst of the invention.
[Fig. 2] It is a schematic view showing a device for use in the method for producing a synthetic gas of the invention.
[Fig. 3] It is a characteristic graph showing a relationship between the amount of barium or lanthanum relative to alumina in a carrier and the specific surface area of the carrier.
[Fig. 4] It is a characteristic graph showing a relationship between a position in the gas flow direction in a reactor and the temperature of the catalyst layer therein.

### [Description of Reference Numerals]

- 1: Carrier
- 2: Platinum Group Element
- 3: Surface of Carrier
- 4: Reactor
- 5: Catalyst Layer

## Claims

1. A catalyst for catalytic partial oxidation of hydrocarbon for use in production of synthetic gas that contains carbon monoxide and hydrogen, through catalytic partial oxidation of a starting hydrocarbon by adding at least oxygen and steam to the starting hydrocarbon that contains methane and light hydrocarbon having at least 2 carbon atoms, which comprises;
a carrier obtained by adding nickel and barium to alumina or an alumina precursor followed by firing it, and
a platinum group element held by the carrier.

2. The catalyst for catalytic partial oxidation of hydrocarbon as claimed in claim 1, wherein the carrier is obtained by adding nickel, barium and lanthanum to alumina or an alumina carrier followed by firing it.

3. A catalyst for catalytic partial oxidation of hydrocarbon for use in production of synthetic gas that contains carbon monoxide and hydrogen, through catalytic partial oxidation of a starting hydrocarbon by adding at least oxygen and steam to the starting hydrocarbon that contains methane and light hydrocarbon having at least 2 carbon atoms, which comprises;
a carrier obtained by adding nickel and lanthanum to alumina or an alumina precursor followed by firing it, and
a platinum group element held by the carrier.

4. The catalyst for catalytic partial oxidation of hydrocarbon as claimed in any one of claims 1 to 3, wherein the firing temperature in obtaining the carrier is 600°C or higher so as to obtain a nickel aluminate-containing carrier.

5. The catalyst for catalytic partial oxidation of hydrocarbon as claimed in any one of claims 1 to 4, wherein the nickel content of the carrier is from 1 to 35 % by weight.

6. The catalyst for catalytic partial oxidation of hydrocarbon as claimed in any one of claims 1 to 5, wherein the total content of barium and/or lanthanum in the carrier is from 0.1 to 20 % by weight.

7. The catalyst for catalytic partial oxidation of hydrocarbon as claimed in any one of claims 1 to 6, wherein the platinum group element is an element selected from rhodium, ruthenium and platinum.

8. The catalyst for catalytic partial oxidation of hydrocarbon as claimed in any one of claims 1 to 7, wherein the platinum group element content of the catalyst is from 0.05 to 5.0 % by weight.

9. The catalyst for catalytic partial oxidation of hydrocarbon as claimed in any one of claims 1 to 8, wherein the platinum group element is so held by the carrier that at least 60 % of it exists within the region of the depth of at most 1 mm from the surface of the carrier.

10. A method for producing synthetic gas, which comprises;
a step of feeding a starting gas to a reactor, wherein the starting gas comprises a starting hydrocarbon that contains methane and light hydrocarbon having at least 2 carbon atoms, and oxygen and steam added thereto, and the starting gas contains hydrogen as the starting hydrocarbon contains hydrogen and/or hydrogen is added thereto, and
a step of bringing the starting gas into contact under heat with the catalyst as stated in any one of claims 1 to 9 and provided in the reactor, to thereby catalytically partially oxidize the starting hydrocarbon to produce a synthetic gas that contains carbon monoxide and hydrogen.

11. The method for producing synthetic gas as claimed in claim 10, wherein the molar number of oxygen/molar number of carbon in the hydrocarbon in the starting gas is from 0.2 to 0.8, and the molar number of steam/molar number of carbon in the hydrocarbon is from 0.2 to 0.8.

12. The method for producing synthetic gas as claimed in claim 10 or 11, wherein the molar number of hydrogen/molar number of hydrocarbon in the starting gas is from 0.001 to 0.1.

13. The method for producing synthetic gas as claimed in any one of claims 10 to 12, wherein the starting gas contains carbon dioxide gas in such a ratio that the molar number of carbon dioxide/molar number of carbon in the hydrocarbon is from 0.01 to 0.6.

14. The method for producing synthetic gas as claimed in claim 13, wherein the carbon dioxide gas recovered from the gas from the outlet port of the reactor is recycled.

15. The method for producing synthetic gas as claimed in any one of claims 10 to 14, wherein the starting gas is fed into the reactor with no reduction treatment as the pretreatment of the catalyst, and the catalytic partial oxidation is started.

16. The method for producing synthetic gas as claimed in any one of claims 10 to 15, wherein the starting gas is preheated at 200°C to 500°C, then fed into the reactor under the condition of such that the pressure is from normal pressure to 8 MPa and the gaseous hourly space velocity is from 5, 000 hr⁻¹ to 500, 000 hr⁻¹, and brought into contact with the catalyst under an adiabatic reaction condition.
